# EUROPEAN PATENT APPLICATION

(11) **EP 2 124 010 A2**
(43) Date of publication of application: **25.11.2009**
(21) Application number: 09154601.0
(22) Date of filing: 09.03.2009
(51) Int. Cl.: F28D 9/00, B01D 53/26

(54) **Refrigeration-based compressed-gas dryer with improved heat exchangers**

(30) Priority: 20.05.2008 IT PN20080042
(71) Applicant: Parker Hiross S.p.A., 35020 Sant'Angelo di Piove (PD) (IT)
(72) Inventor: Bellemo, Luciano, 30015 Chioggia (VE) (IT)
(74) Representative: Giugni, Valter

(57) **Abstract**

Refrigeration-based compressed-gas dryer comprising a group of heat exchangers (10), this group of heat-exchangers including a gas-to-gas heat exchanger (16), an evaporator (22), a condensate separator (30) and at least a refrigerating circuit (28), wherein in said gas-to-gas heat exchanger, which works as a heat recovery apparatus, there is provided a pre-cooling section (18) and a heating section (20), and wherein in said evaporator (22) there is provided a cooling section (24) for the compressed gas to be dried and an evaporation section (26) for a refrigerant medium, for said compressed gas to be cooled down to a desired dew point.

Each individual heat exchanger in said group of heat exchangers (10) is formed of a plurality of heat-exchange stacks or circuits (80), which create a passageway (84) for the compressed gas and at least two passageways (85, 86) for the refrigerant medium, respectively, said heat-exchange stacks or circuits (80) being defined by a plurality of fins (81) attached to thin, planar sheet-metal plates (89) lying orthogonally to the fins.

The increased number of passageways for the refrigerant medium enables the heat-exchange efficiency of the evaporator (22) to be improved.

## Description

The present invention refers to a refrigeration-based compressed-gas dryer provided with groups of improved heat exchangers.

Basically, a refrigeration-based compressed-gas dryer of the above-cited kind is a refrigeration machine, which is usually employed to remove moisture from a given flow of compressed air or, for the matter, any other kind of compressed gas. In this connection, although reference will be generally made to compressed air in the following description, this shall be understood as extending to include and applying to any other kind of compressed gas, or mixture of compressed gases, that might require dehumidifying.

The humidity that is present in compressed air is generally known as being the main cause of corrosion and premature breakdown of piping systems, leading eventually to a malfunction or even full unserviceableness of the machines that use the compressed air. As a result, the need arises for this humidity to be removed from the compressed air prior to the latter being supplied to the machines and equipment that use it.

In its traditional mode of operation, a refrigeration-based compressed-air dryer usually works on the principle according to which the compressed air entering the dryer is cooled down in order to cause the humidity (water vapour) to condense.

The dryer essentially comprises a heat recovery apparatus, or gas-to-gas heat exchanger, and an evaporator working practically as a pair of heat exchangers.

When reference is made to a group of heat exchangers in the following description, this is intended to mean the above-mentioned heat recovery apparatus and evaporator as an assembly.

The compressed air to be dried is initially pre-cooled in a pre-cooling section of the heat recovery apparatus; then, it exits said pre-cooling section of the gas-to-gas heat exchanger and cools further down in a cooling section of the evaporator until reaching down to a desired dew point.

This cooling-down effect is brought about by a refrigerant medium evaporating in an evaporation section of the evaporator, wherein this evaporating refrigerant medium is caused to flow, i.e. is circulated in a refrigeration circuit. However, even water may be possibly used as a refrigerant medium.

At this point, the compressed air, upon having been so cooled down in the heat recovery apparatus in the first place and the evaporator in the second place, reaches an air condenser, or condensate separator, in which the condensed water vapour collected therein is separated from the air. The resulting condensate is then let off through a duly provided condensate drainage arrangement.

The air flow leaving the condensate separator flows then through the initial heat-recovery arrangement of the refrigerating circuit, in a heating section thereof, so as to bring about a pre-cooling effect by exchanging heat with the compressed air flowing into the dryer.

Known in the art there are gas-to-gas heat exchangers and evaporators of a great variety of kinds, obtained with the use of various technologies.

In particular, known in the art there are refrigeration-based compressed-gas dryers, in which the pre-cooling and heating sections of the heat recovery arrangement, as well as the air cooling and refrigerant-medium evaporating sections of the evaporator are totally finned in an attempt to increase the efficiency and the compactness of the heat-exchanger group.

Cited in this connection there may for example be the group of heat exchangers described in the European patent application EP 1593924.

Cited in this publication there are also the disclosures in the US patents Nos. 5845505 and 6085529, in which the heat recovery arrangement and the evaporator are manufactured separately and then joined together to form a group of heat exchangers, and in which the heat-exchange process in the recovery arrangement and the evaporator is a so-called cross-flow heat-exchange process, i.e. takes place in a cross-flow pattern.

It is therefore a main object of the present invention to provide a refrigeration-based compressed-gas dryer that is very compact, i.e. low in space requirements.

Within such general object, another purpose of the present invention is to provide a refrigeration-based compressed-gas dryer, which has an improved heat-exchange efficiency.

Yet another purpose of the present invention is to provide a refrigeration-based compressed-gas dryer, which uses a group of heat exchangers capable of being manufactured at particularly low costs.

According to the present invention, these aims are reached in a refrigeration-based compressed-gas dryer, which incorporates the characteristics and features as recited in the appended claims.

Anyway, the structural, operating and construction-related features of the present invention, as well as the advantages thereof over similar prior-art solutions, will be more readily understood from the detailed description that is given below by way of non-limiting example with reference to the accompanying drawings, which illustrate a group of heat exchangers for a refrigeration-based compressed-gas dryers made in accordance with the innovative principles of the present invention as compared with similar prior-art solutions, and in which:
- Figure 1 is a schematic view of a refrigeration-based compressed-gas dryer according to the prior art;
- Figure 2 is a schematic view of a group of heat exchangers for refrigeration-based compressed-gas dryers according to the teachings of the present invention, in which the heat-exchange processes take place in a cross-flow mode in the heat recovery arrangement and in a nearly counterflow mode in the evaporator;
- Figure 3 is a schematic, exploded view of a heat-exchange stack of the group of heat exchangers illustrated in Figure 2;
- Figure 4 is a perspective view of the of a heat-exchange stack illustrated in Figure 3.

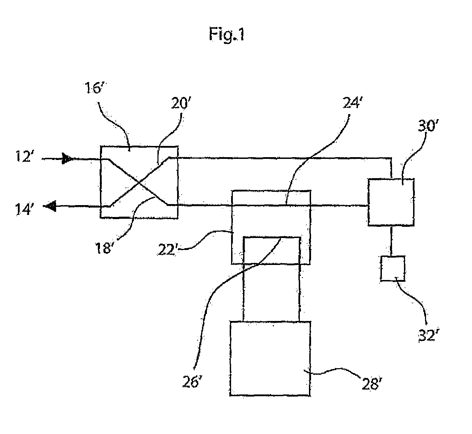

With reference to Figure 1, this can be noticed to schematically illustrate a refrigeration-based compressed-gas dryer according to the prior art, in which a compressed gas to be dried flows into an inlet pipe 12' and flows out in a dried state from an outlet pipe 14'.

As already set forth in the preamble to this description, a compressed-gas dryer according to the prior art comprises a gas-to-gas heat exchanger 16' including a pre-cooling section 18' for the compressed gas to be dried and a heating section 20' for the dried compressed gas, and further an evaporator 22' with a cooling section 24' for the compressed gas and an evaporating section 26' for a refrigerant medium flowing through a refrigeration circuit 28'. The dryer further comprises also a condensate separator 30' and a condensate trap, i.e. drain provision 32'.

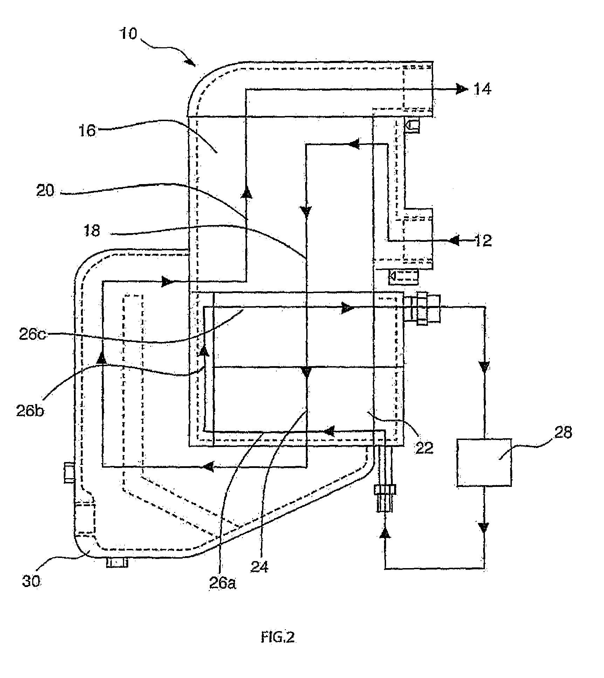

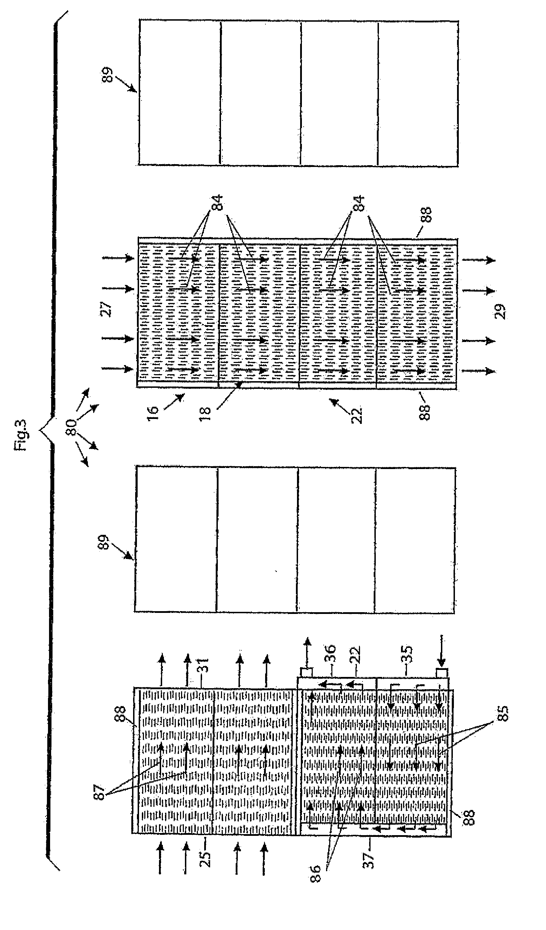

With reference to Figures 2 and 3, a refrigeration-based compressed-gas dryer according to the present invention comprises an inflow conduit 12 for letting in the compressed gas to be dried, and an outflow conduit 14 for the dried compressed gas to be let out.

The refrigeration-based compressed-gas dryer further comprises a group of heat exchangers 10, which in turn comprises a gas-to-gas heat exchanger or heat recovery apparatus 16 and an evaporator 22.

The gas-to-gas heat exchanger 16 has a pre-cooling section 18 for the compressed gas to be dried and a heating section 20 for the compressed gas in the dried state thereof.

In turn, the evaporator 22 has a cooling section 24 for the compressed gas and an evaporation section 26a-26b-26c for a refrigerant medium flowing through a refrigeration circuit 28; furthermore, the dryer comprises a condensate separator 30.

In the schematic arrangement of the group of heat exchangers 10 according to the present invention, the heat-exchange processes take place in a nearly counter-flow mode in the evaporator 22 and in a cross-flow mode in the heat recovery apparatus 16.

The evaporator 22, in fact, is of the kind in which the compressed air is made to flow therethrough following a single passageway, i.e. with a single run from the top downwards to the bottom along the section 24, whereas the refrigerant medium flows therethrough following two passageways, i.e. with two runs in the first place along the section 26a and then collecting into the header 37 by flowing along the section 26b, and then along the section 26c to flow again through the evaporator 22.

According to the present invention, the two heat exchangers, i.e. the heat recovery apparatus 16 and the evaporator 22 forming the heat-exchanger group 10, may be made either in a single-piece construction as a unitary sub-assembly or in two distinct pieces to be then welded together. In turn, each individual heat exchanger may be made either in a single-piece construction as a unitary sub-assembly or in two distinct pieces to be then welded together.

Illustrated in Figure 3 is the solution calling for the heat exchangers 16 and 22 to be made in two distinct pieces each.

Generally, these heat exchangers are manufactured with a furnace-brazing process, which may for instance be performed either under vacuum conditions or under controlled non-oxidizing atmosphere.

In addition, in view of obtaining a heat-exchanger group 10 that is still more compact in its construction, a condensate separator 30 is preferably located in the vicinity of the evaporator 22, as this is shown in Figure 2.

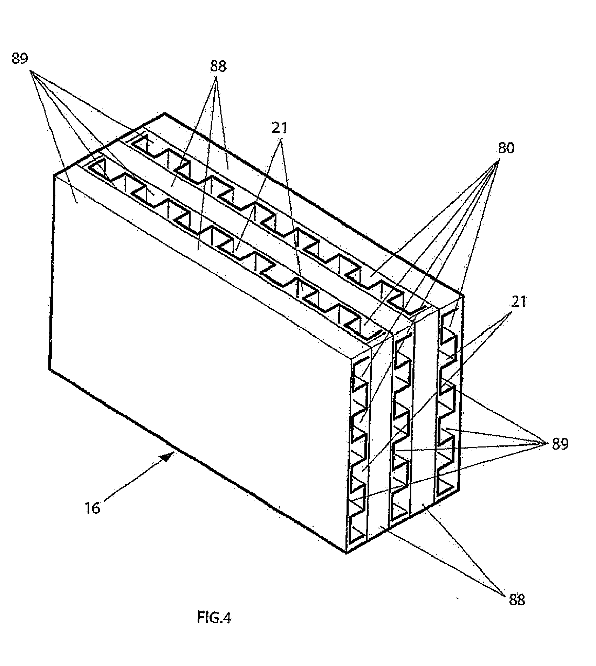

Illustrated in Figure 4 is the main heat-exchange element of the heat-recovery apparatus or evaporator 16. It comprises a plurality of heat-exchanging stacks (circuits) 80 adapted to allow the fluids to flow therethrough while exchanging heat with each other.

Each such stack 80 comprises a plurality of fins 21 attached to thin, planar sheet-metal plates 89, which are interposed between the fins so as to keep them spaced from each other and create the channels for the fluids to flow therethrough.

As used here, the term "fins" shall be understood as meaning sheet-metal plates - preferably of aluminium - properly shaped into a meander-like pattern so as to ensure a greater heat-exchange effect. Also the sheet-metal plates 89 are preferably made of aluminium.

The fins are obtained by drawing a thin sheet-metal plate so as to obtain a pattern of vertical and horizontal surfaces, i.e. surfaces that are orthogonal relative to each other.

The horizontal surfaces lie in two planes spaced by a few millimetres from each other, whereas the vertical surfaces, which represent the "actual" profiling, i.e. the outline of the fins, have such a geometry as to define flow passages and increase both the heat-exchange surface area and the turbulence of the fluid flowing therethrough.

As a result, by welding - preferably brazing - the horizontal surfaces of the fins to the sheet-metal plates 89 there are created and defined the "channels" or conduits for the air and the refrigerant medium to flow therethrough.

Usually, the stacks (circuits) of a side are in the number of "n", whereas the those of the other side 31 lying orthogonally relative to the first one are in the number of "n+1 ", so that each stack exchanges heat with the stacks lying adjacent thereto. Heat is exchanged through the thin sheet-metal plates 89 and both the horizontal and vertical surfaces of the fins.

It can be readily appreciated that the number of stacks 80 forming the heat-exchanger group 10 is roughly proportional to the flow rate of the gas to be treated.

Each stack 80 comprises two sheet-metal plates 89, which the fin 21 is attached to.

Furthermore, each stack 80 comprises a plurality of spacing members 88 that are duly attached to the plurality of fins so as to define the circuits through which the fluids are circulated by forcing them to follow the proper heat-exchange flowpaths.

As used here, the term "spacing members" shall be understood to mean metal bars, preferably of aluminium, that are square or rectangular in their cross-section and have a side thereof that is equal to the height of the vertical surfaces of the finned plate. These bars are then welded to the sheet-metal plates 89 on the two opposite sides thereof, corresponding to the horizontal surfaces of the finned plate.

The compressed gas to be dried flows into the conduit 27 (Figure 3), flows through the conduits 84 and finally flows out from the conduit 29, while undergoing pre-cooling along the region that lies in contact with the conduits 87 and, subsequently, final cooling-down along the region that lies in contact with the conduits 85 and 86 so as to reach down to the desired dew point.

The refrigerant medium enters the header 35 and is directed into the conduits 85, where it exchanges heat with and, hence, cools down the compressed gas that flows in the lower part of the conduits 84. It then flows into the header 37e to be directed into the conduits 86 and to finally flow out from the header 36. Therefore, it clearly appears that the section 22 works as an evaporator, since the refrigerant medium evaporates, thereby cooling the compressed gas, whereas the part relating to the section 16 works as a heat recovery arrangement.

Each conduit 84 is provided with an inlet 27 for the compressed gas directed to the pre-cooling section 15, said compressed gas then continuing to flow through the evaporator 22 until it finally reaches the outlet 29. From this outlet, the cooled compressed gas, upon having been separated from the condensate, is conveyed through an inlet 25 into a post-heating section of the heat recovery arrangement 16 to eventually exiting the same heat recovery arrangement through the section 31 thereof.

The advantage of this heat exchanger over the one being described in the afore-cited publication EP 1593924 lies in the ability thereof to improve the heat-exchange efficiency of the evaporator 22. In fact, owing to the cross-flow pattern in the heat-recovery apparatus, the pre-cooled compressed air entering the evaporator has no uniform temperature profile, actually, and is hotter in correspondence to the inflow and outflow zones of the refrigerant medium. For this reason, the heat to be exchanged in such zones is greater than the amount of heat that can be actually subtracted, i.e. removed by the refrigerant medium flowing therethrough, with the result that a non-uniform temperature profile is also caused to arise in the air exiting the evaporator under a corresponding increase in the ultimate dew point.

A possibility given for this drawback to be done away with lies in providing a double-pass evaporator such as the above-described one according to the present invention.

The present invention may on the other hand be also embodied in a manner differing from the afore-described one by e.g. increasing the number of passages of the refrigerant medium in the evaporator, in that as many as 4 or 6 such passages may for instance be provided as compared with the single passage available to the compressed gas to be dried. The number of passages provided for the refrigerant medium is usually an even one, since the inlet and outlet connection fittings should preferably and desirably be located on a same side.

In this way, the afore-indicated aims of the present invention are therefore fully and effectively reached. It will of course be readily appreciated that the refrigeration-based compressed-gas dryer according to the present invention may be embodied in a number of ways differing from the ones that have been described hereinbefore and illustrated in the accompanying drawing by mere way of non-limiting example, and the materials indicated in connection with the construction of the various parts of the dryer may also be different, without departing from the scope of the present invention as defined by the appended claims.

## Claims

1. Refrigeration-based compressed-gas dryer comprising a group of heat exchangers (10), this group of heat-exchangers including a gas-to-gas heat exchanger (16), an evaporator (22), a condensate separator (30) and at least a refrigerating circuit (28), wherein in said gas-to-gas heat exchanger, which works as a heat recovery apparatus, there is provided a pre-cooling section (18) and a heating section (20), and wherein in said evaporator (22) there is provided a cooling section (24) for the compressed gas to be dried and an evaporation section (26) for a refrigerant medium, for said compressed gas to be cooled down to a desired dew point, **characterized in that** each individual heat exchanger in said group of heat exchangers (10) is formed of a plurality of heat-exchange stacks or circuits (80), which create a passageway (84) for the compressed gas and at least two passageways (85, 86) for the refrigerant medium, respectively, said heat-exchange stacks or circuits (80) being defined by a plurality of fins (81) attached to thin, planar sheet-metal plates (89) lying orthogonally to the fins.

2. Refrigeration-based compressed-gas dryer according to claim 1, **characterized in that** in each group of heat exchangers (10) the related heat-exchange processes take place in a counter-flow mode in the evaporator (22) and in a cross-flow mode in the heat-recovery arrangement (16).

3. Refrigeration-based compressed-gas dryer according to claim 2, **characterized in that** in each group of heat exchangers (10) the evaporator (22) is provided with an evaporation section (26a, 26b, 26c) with at least one header (37) interposed therebetween.

4. Refrigeration-based compressed-gas dryer according to claim 3, **characterized in that** each group of heat exchangers (10) comprises "n" heat-exchange stacks or circuits (80) on a first side of the group and "n+1" heat-exchange stacks or circuits (80) on a second side arranged orthogonally to the first one.

5. Refrigeration-based compressed-gas dryer according to claim 4, **characterized in that** each stack or circuit (80) comprises a plurality of spacing members (88) that are joined to the fins (81) and on two opposite sides of the sheet-metal plates (89).

6. Refrigeration-based compressed-gas dryer according to claim 5, **characterized in that** said spacing members (88) are formed of metal bars, whose length is equal to the height of the corresponding stack or circuit (80), so as to define the related fluid-circulating passageways (84-86).
